# EUROPÄISCHE PATENTANMELDUNG

(11) **EP 4 574 461 A1**
(43) Veröffentlichungstag der Anmeldung: **25.06.2025**
(21) Anmeldenummer: 24220845.2
(22) Anmeldetag: 18.12.2024
(51) Int. Cl.: B60C 11/12

(54) **FAHRZEUGREIFEN**

(30) Priorität: 20.12.2023 DE 102023213030
(71) Anmelder: Continental Reifen Deutschland GmbH, 30175 Hannover (DE)
(72) Erfinder: Özüduru, Ahmet, 30175 Hannover (DE); Micuch, Michal, 020 01 Púchov (SK); Yang, Mengdi, 30175 Hannover (DE)
(74) Vertreter: Continental Corporation

(57) **Zusammenfassung**

Die Erfindung betrifft einen Fahrzeugreifen mit einem Laufstreifen mit Profilblöcken und/oder zumindest eine Profilrippe, wobei Profilblöcke bzw. die zumindest eine Profilrippe mit Einschnitten (5, 12) versehen sind, wobei jeder Einschnitt (5, 12) zumindest eine Einschnittwandwölbung (11) aufweist, welche in der in Draufsicht vorliegenden Erstreckungsrichtung des Einschnitts (5, 12) langgestreckt ist.

Der Einschnitt (5, 12) ist aus einer von den Einschnittkanten (6) ausgehenden, in radialer Richtung in das zugehörige Profilpositiv (1, 2) hineinverlaufenden, inneren Einschnittzone (5c, 12c) und einer den kompletten Einschnittgrund (8) mitbildenden, die innere Einschnittzone (5c, 12c) im Inneren des Profilpositivs (1, 2) umgebenden, zu den Einschnittkanten (6) reichenden, äußeren Einschnittzone (5d, 12d) mit der maximalen Breite (b_{E}) gebildet, wobei die innere Einschnittzone (5c, 12c) eine gegenüber der maximalen Breite (b_{E}) des Einschnitts (5, 12) kleiner ausgeführte Breite (bc) aufweist und die komplette Einschnittwandwölbung (11) in der inneren Einschnittzone (5c, 12c) ausgebildet ist.

## Beschreibung

Die Erfindung betrifft einen Fahrzeugreifen mit einem Laufstreifen mit Rillen, welche Profilblöcke und/oder zumindest eine Profilrippe begrenzen, wobei Profilblöcke bzw. die zumindest eine Profilrippe mit in Draufsicht zur axialen Richtung unter einem Winkel von 0° bis zu 50° verlaufenden Einschnitten mit jeweils einer maximalen Breite von 0,4 mm bis 2,0 mm, einer maximalen Tiefe von 70% bis 100% der Profiltiefe und Einschnittkanten versehen sind, wobei jeder Einschnitt zumindest in einem in Draufsicht vorliegenden Abschnitt auf die maximale Tiefe reicht und in diesem Abschnitt zumindest eine von den Einschnittkanten beabstandete, lokale, im in radialer Richtung ausgerichteten Querschnitt bogenförmig verlaufende Einschnittwandwölbung mit einer auf der einen Einschnittwand ausgebildeten Vertiefung und einem dieser gegenüberliegenden, auf der anderen Einschnittwand ausgebildeten, mit der Vertiefung korrespondierenden und in diese hineinragenden Vorsprung aufweist, wobei die Einschnittwandwölbung in der in Draufsicht vorliegenden Erstreckungsrichtung des Einschnitts langgestreckt ist, eine parallel zur Laufstreifenperipherie ermittelte maximale Erstreckungslänge und eine in radialer Richtung ermittelte maximale Breite aufweist.

Ein derartiger Fahrzeugreifen ist beispielsweise aus der DE 10 2018 220 704 A1 bekannt. Der Fahrzugreifen weist einen Laufstreifen mit Profilpositiven mit Einschnitten mit einer konstanten Breite von 0,4 mm bis 0,8 mm und einer maximalen Tiefe von 65% bis 100% der Profiltiefe auf. Jeder Einschnitt weist einen auf seine maximale Tiefe reichenden Hauptabschnitt und zumindest einen gegenüber dem Hauptabschnitt seichter ausgeführten Randabschnitt auf. Im Hauptabschnitt ist eine Einschnittwandwölbung aus einer Vertiefung und einem Vorsprung ausgebildet. Die Erstreckungslänge der Einschnittwandwölbung beträgt mindestens 50% der in Erstreckungsrichtung des Einschnitts ermittelten Länge des Hauptabschnitts. In dem bzw. den Randabschnitt(en) sind die Einschnittwände unstrukturiert. Die Einschnittwandwölbung verbessert die Steifigkeit der Profilelemente.

Es ist bekannt, dass Einschnitte einen signifikanten Beitrag zur Verbesserung der Schneegriffeigenschafen des Reifens leisten können. Bei der Ausführung der Einschnitte ist darauf zu achten, dass diese die Steifigkeit der jeweiligen Profilpositive nicht zu stark herabsetzen, damit weiterhin gute Handlingeigenschaften auf trockener Fahrbahn gegeben sind. Bei Fahrzeugreifen der eingangs genannten Art verbessern die in den Einschnitten ausgebildeten Einschnittwandwölbungen unter Belastung die gegenseitige Abstützung der Einschnittwände und damit die Abstützung der entsprechenden Profilpositivbereiche, was zur Aufrechterhaltung einer hohen Steifigkeit der Profilpositive beiträgt. Da Einschnitte ferner einen Beitrag zur Entwässerung des Laufstreifens leisten und somit für die Nässeperformance, beispielsweise die Nassgriffeigenschaften, von Bedeutung sind, ist bei der Ausgestaltung von Einschnittwandwölbungen das Wasserdrainage- und Wasseraufnahmevermögen der Einschnitte zu berücksichtigen.

Der Erfindung liegt die Aufgabe zu Grunde, bei einem Fahrzeugreifen der eingangs genannten Art die Einschnitte im Hinblick den zwischen der Steifigkeit der Profilpositive und der Nässeperformance bestehende Zielkonflikt auf deutlich günstigere Weise zu lösen.

Gelöst wird die gestellte Aufgabe erfindungsgemäß dadurch, dass der Einschnitt aus einer von den Einschnittkanten ausgehenden, in radialer Richtung in das zugehörige Profilpositiv hineinverlaufenden, inneren Einschnittzone und einer den kompletten Einschnittgrund mitbildenden, die innere Einschnittzone im Inneren des Profilpositivs umgebenden, zu den Einschnittkanten reichenden, äußeren Einschnittzone mit der maximalen Breite gebildet ist, wobei die innere Einschnittzone eine gegenüber der maximalen Breite des Einschnitts kleiner ausgeführte Breite aufweist und die komplette Einschnittwandwölbung in der inneren Einschnittzone ausgebildet ist.

Durch die in der schmäleren, inneren Einschnittzone befindliche Einschnittwandwölbung stützen sich die jeweiligen Profilpositivbereiche unter Belastung gegenüber bekannten Einschnittwandwölbungen auf eine für eine hohe Profilsteifigkeit besonders günstige Weise aneinander ab. Der vorteilhafte Effekt der Einschnittwandwölbung ist deutlich ausgeprägter als bisher. Die auf die maximale Breite des Einschnitts ausgeführte äußere Einschnittzone sorgt für die Aufrechterhaltung eines hohen Wasseraufnahmevermögens des Einschnitts, sodass auch eine gute Nässeperformance gegeben ist.

Gemäß einer bevorzugten Ausführung beträgt die Breite der inneren Einschnittzone mindestens 0,20 mm, insbesondere 0,40 mm bis 0,60 mm, wobei die Breite der inneren Einschnittzone mindestens 0,20 mm, insbesondere mindestens 0,40 mm, bevorzugt mindestens 0,60 mm, kleiner ist als die maximale Breite des Einschnitts. Diese Abstimmung der Breiten sorgt unter Aufrechterhaltung einer guten Nässeperformance für im Hinblick auf die Steifigkeit der Profilpositive weiter verbesserte Abstützungseffekte.

Gemäß einer weiteren bevorzugten Ausführung reicht die innere Einschnittzone in radialer Richtung bis in eine maximale Tiefe von 60% bis 90%, insbesondere von 65% bis 75%, der maximalen Tiefe des Einschnitts. Dadurch bleibt ein im Hinblick auf die Nässeperformance günstiger, als Wasserreservoir wirkender Einschnittbereich radial innerhalb der schmäleren, inneren Einschnittzone erhalten.

Ferner ist es günstig, wenn die innere Einschnittzone eine entlang der Einschnittmittellinie ermittelte Erstreckungslänge von 65% bis 90%, insbesondere von 70% bis 75%, der entlang der Einschnittmittellinie ermittelten Erstreckungslänge des Einschnitts aufweist. Dies trägt zu einer besonders günstigen Lösung des erwähnten Zielkonflikts bei.

Eine weitere vorteilhafte Ausführung sieht vor, dass die maximale Breite der Einschnittwandwölbung 35% bis 70%, insbesondere 40% bis 60%, der maximalen Tiefe der inneren Einschnittzone beträgt. Dies trägt zu einer Verbesserung der gegenseitigen Abstützung der Einschnittwände und daher zur Aufrechterhaltung einer hohen Steifigkeit der Profilpositive bei.

Bevorzugter Weise beträgt die maximale Erstreckungslänge der Einschnittwandwölbung 10% bis 25% der Erstreckungslänge des Einschnitts. Die Einschnittwandwölbung ist daher im Hinblick auf ihrer Erstreckungslänge deutlich begrenzt ausgeführt, was vor allem für das Wasseraufnahmeverhalten des Einschnitts beim Durchlaufen des Footprints auf nasser Fahrbahn und somit für die Nässeperformance vorteilhaft ist.

Ferner ist es günstig, wenn die Einschnittwandwölbung, im in radialer Richtung ausgerichteten Querschnitt und im parallel zur Laufstreifenperipherie ausgerichteten Längsschnitt betrachtet, jeweils bogenförmig verläuft, wobei der Vorsprung der Einschnittwandwölbung durch eine durchgehend nach außen gewölbte Deckfläche und die Vertiefung der Einschnittwandwölbung durch einen durchgehend nach innen gewölbten Boden begrenzt ist. Diese Einschnittwandwölbung verbessert das Wasseraufnahmeverhalten des Einschnitts weiter, insbesondere deshalb, weil im die Einschnittwandwölbung überströmenden Wasser kaum Verwirbelungen auftreten.

Gemäß einer weiteren bevorzugten Ausführung ist vorgesehen, dass die Einschnittwandwölbung von unstrukturierten Wandabschnitten der Einschnittwände umlaufen ist und bevorzugt diese Wandabschnitte die nicht von der Einschnittwandwölbung eingenommenen Bereiche der inneren Einschnittzone einnehmen. Diese Maßnahme ist ebenfalls für das Wasseraufnahmeverhalten des Einschnitts und somit für die Nässeperformance von Vorteil.

Eine weitere bevorzugte Ausgestaltung sieht vor, dass die Einschnittwandwölbung eine in einer konstanten Tiefe verlaufende erste Symmetrieebene und eine in radialer Richtung verlaufende zweite Symmetrieebene aufweist. Derart symmetrische Einschnittwandwölbungen sind für die erwähnten, die Profilsteifigkeit erhöhenden Abstützungseffekte günstig.

Bei der letztgenannten bevorzugten Ausführung besteht eine vorteilhafte Weiterentwicklung darin, dass die konstante Tiefe, in welcher die erste Symmetrieebene der Einschnittwandwölbung verläuft, 50% bis 75%, insbesondere 55% bis 70%, bevorzugt 60% bis 65%, der maximalen Tiefe, bis in welche die innere Einschnittzone reicht, beträgt.

Bei der letztgenannten bevorzugten Ausführung besteht eine weitere vorteilhafte Weiterentwicklung darin, dass die Einschnittwandwölbung eine entlang der Schnittlinie der Symmetrieebenen ermittelte maximale Auslenkung von 0,3 mm bis 1,5 mm aufweist, wobei die maximale Auslenkung senkrecht zu einer geraden Bezugslinie ermittelt sowie auf die Einschnittmittelfläche bezogen ist, wobei die Bezugslinie innerhalb der zweiten Symmetrieebene die Einschnittmittelfläche im Bereich radial außerhalb der Einschnittwandwölbung mit der Einschnittmittelfläche im Bereich radial innerhalb der Einschnittwandwölbung verbindet. Eine derart "ausgebeulte" Auslenkung trägt zur Aufrechterhaltung einer hohen Profilsteifigkeit bei.

Eine weitere vorteilhafte Ausführung sieht vor, dass die Einschnitte, in Draufsicht betrachtet, zumindest über die innere Einschnittzone insgesamt gerade oder durchgehend gebogen, also bogenförmig, verlaufen.

Eine weitere bevorzugte Ausführung ist dadurch gekennzeichnet, dass zu den Einschnitten Einschnitte gehören, welche jeweils mit zumindest einer an beide Einschnittwände angebundenen Grundanhebung versehen sind, wobei die Einschnittwandwölbungen zumindest über den Großteil ihrer maximalen Erstreckungslänge, insbesondere über zumindest 80% ihrer maximalen Erstreckungslänge, bevorzugt über ihre komplette maximale Erstreckungslänge, radial außerhalb eines auf der maximalen Tiefe des Einschnitts verlaufenden Grundabschnitts des Einschnittgrunds verlaufen. Die Länge und Position der Einschnittwandwölbung ist also auf die Ausgestaltung des tiefsten "Einschnittbereichs" entsprechend abgestimmt. Genau in diesem Bereich zeigen die Einschnittwandwölbungen eine besonders ausgeprägte Versteifungswirkung auf die angrenzenden Profilbereiche, wobei die Grundanhebungen eine im Hinblick auf die Versteifungswirkung besonders vorteilhafte Ergänzung darstellen.

Bei der letztgenannten Ausführung ist es günstig, wenn die Grundanhebung(en) eine bzw. zwei randseitige Grundanhebung(en) ist bzw. sind oder dass zu den Grundanhebungen eine bzw. zwei randseitige Grundanhebung(en) gehören, wobei die bzw. jede randseitige Grundanhebung dem Einschnitt einen bzw. jeweils einen randseitigen Einschnittabschnitt verleiht, wobei der Einschnitt aus dem bzw. den randseitigen Einschnittabschnitt(en) und einem auf die maximale Tiefe des Einschnitts reichenden Hauptabschnitt zusammengesetzt ist, wobei die innere Einschnittzone, bei Draufsicht auf die Einschnittwände betrachtet und bezogen auf ihren äußeren Umfang, die Gestalt des Hauptabschnitts in verkleinerter Form aufweist.

Ferner ist es von Vorteil, wenn Einschnitte vorgesehen sind, welche jeweils mit zwei Einschnittwandwölbungen versehen sind, wobei bevorzugt die eine Einschnittwandwölbung um 180° verdreht zur anderen Einschnittwandwölbung orientiert ist, wobei die Drehung um eine in radialer Richtung verlaufende Achse erfolgt.

Weitere Merkmale, Vorteile und Einzelheiten der Erfindung werden nun anhand der Zeichnung, die schematisch ein Ausführungsbeispiel der Erfindung zeigt, näher beschrieben. Dabei zeigen
Fig. 1 eine vereinfachte Draufsicht auf einen in die Ebene abgewickelten Laufstreifen eines Fahrzeugreifens mit einer Ausführungsvariante der Erfindung,
Fig. 2 eine vergrößerte Draufsicht auf das Detail Z₂ der Fig. 1,
Fig. 3 eine Schrägansicht einer Visualisierung eines Einschnitts (Abzugskörper des Einschnitts),
Fig. 4 eine Draufsicht auf die Visualisierung des Einschnitts aus Fig. 3,
Fig. 5 eine Frontansicht der Visualisierung des Einschnitts aus Fig. 3,
Fig. 6 einen Schnitt entlang der Linie VI-VI der Fig. 5 mit an den Einschnitt angrenzendem Gummimaterial,
Fig. 7 eine Vergrößerung der Fig. 6 und
Fig. 8 eine Frontansicht einer Visualisierung eines weiteren Einschnitts (Abzugskörper des Einschnitts).

Gemäß der Erfindung ausgeführte Fahrzeugreifen sind Reifen für Kraftfahrzeuge, insbesondere für mehrspurige Kraftfahrzeuge, bevorzugt für Personenkraftwagen (PKWs), Vans (Transporter) oder SUVs, sowie vorzugsweise Fahrzeugluftreifen, besonders bevorzugt Fahrzeugluftreifen in Radialbauart für Felgen mit einem ganzzahligen Felgendurchmesser von 13 Zoll bis 24 Zoll, insbesondere von 18 Zoll bis 23 Zoll.

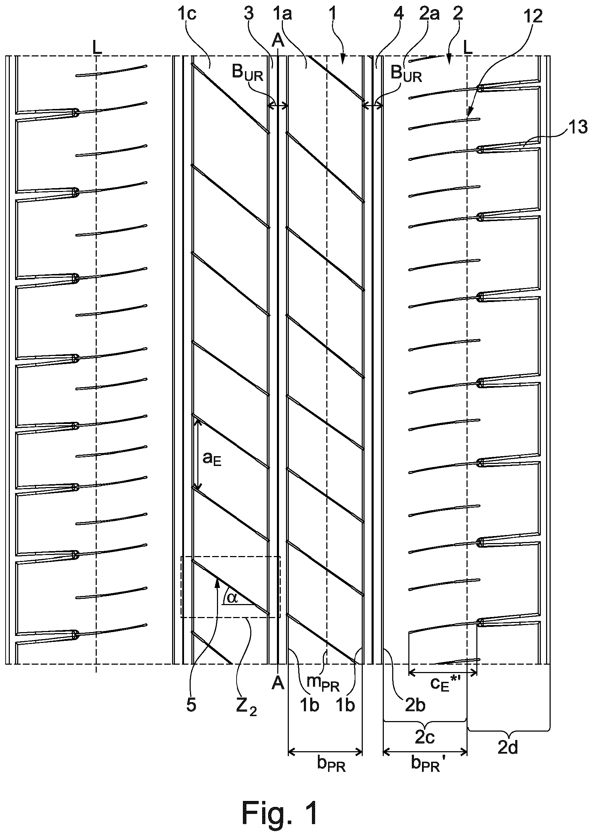

Fig. 1 zeigt eine Draufsicht auf einen Ausschnitt eines Umfangsabschnitts eines Laufstreifens eines Fahrzeugreifens, welcher in PKW-Reifen ist. Die Reifenäquatorialebene ist durch eine Linie A-A und die seitlichen Ränder der Bodenaufstandsfläche des Laufstreifens sind durch Linien L angedeutet. Die Bodenaufstandsfläche entspricht bekannter Weise dem statisch ermittelten Footprint gemäß E.T.R.T.O.-Standards (Last bei 70% der maximalen Tragfähigkeit bei einem Innendruck von 85% nach E.T.R.T.O.-Norm). Der Laufstreifen weist zwei in Umfangsrichtung umlaufende, mittlere Profilrippen 1 und zwei in Umfangsrichtung umlaufende, schulterseitige Profilrippen 2 auf, wobei die mittleren Profilrippen 1 voneinander durch eine entlang der Reifenäquatorialebene sowie in Draufsicht gerade verlaufende, zentrale Umfangsrille 3 und zur jeweils benachbarten schulterseitigen Profilrippen 2 durch je eine in Draufsicht gerade verlaufende, schulterseitige Umfangsrille 4 getrennt sind.

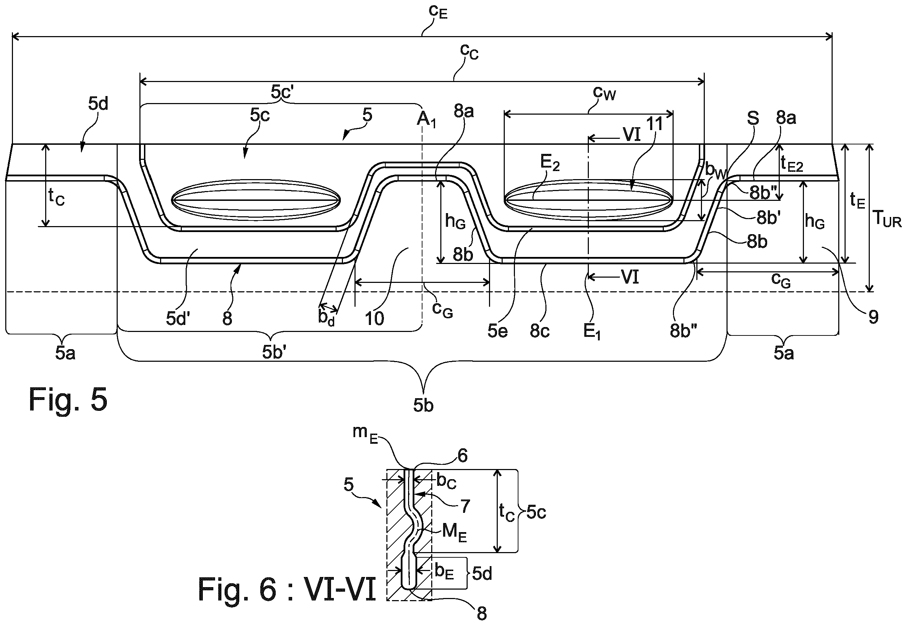

Die Umfangsrillen 3, 4 sind in radialer Richtung in der vorgesehenen Profiltiefe T_{UR} (Fig. 5) ausgeführt, welche für den bevorzugten Reifentyp (PKW, Van, SUV) üblicherweise 6,5 mm bis 13,0 mm beträgt, und weisen an der Laufstreifenperipherie in axialer Richtung jeweils eine Breite B_{UR} von 6,0 mm bis 13,0 mm auf. Sind die Umfangsrillen 3, 4 verschieden tief ausgeführt, wird unter der Profiltiefe T_{UR} die Tiefe der tiefsten Umfangsrille(n) 3, 4 verstanden.

Die Ausgestaltung der Profilrippen 1, 2, auf welche noch genauer eingegangen wird, ist derart, dass, in Draufsicht betrachtet, die in der einen Laufstreifenhälfte befindlichen Profilrippen 1, 2 durch eine 180°-Drehung in die in der jeweils anderen Laufstreifenhälfte befindlichen Profilrippen 1, 2 überführbar sind, sodass der Laufstreifen bezüglich der Reifenäquatorialebene (Linie A-A) eine asymmetrische Gestalt aufweist und der Fahrzeugreifen keine bevorzugte Orientierung auf der Achse eines Fahrzeuges besitzt.

Die Profilrippe 1, 2 weist eine in der Laufstreifenperipherie liegende Rippenaußenfläche 1a (mittlere Profilrippe 1), 2a (schulterseitige Profilrippe 2) sowie an jeder angrenzenden Umfangsrille 3, 4 bzw. an der jeweils angrenzenden schulterseitigen Umfangsrille 4 eine in Draufsicht gerade verlaufende Rippenkante 1b (mittlere Profilrippe 1), 2b (schulterseitige Profilrippen 2) auf. Außerdem weist jede mittlere Profilrippe 1 eine an der Rippenaußenfläche 1a in axialer Richtung ermittelte Breite b_{PR} und jede schulterseitige Profilrippe 2 eine an der Rippenaußenfläche 2a innerhalb der Bodenaufstandsfläche in axialer Richtung ermittelte Breite b_{PR}' auf. Jede mittlere Profilrippe 1 weist ferner eine die maximale Breite b_{PR} halbierende, in Umfangsrichtung verlaufende Rippenmittellinie m_{PR} auf. Jede schulterseitige Profilrippe 2 weist ferner einen innerhalb der Bodenaufstandsfläche liegenden Innenabschnitt 2c und einen außerhalb der Bodenaufstandsfläche liegenden Außenabschnitt 2d auf.

Die mittleren Profilrippen 1 sind jeweils mit einer Anzahl von Einschnitten 5 versehen, welche die jeweilige mittlere Profilrippe 1 durchqueren, daher in die mittlere Umfangsrille 3 und die angrenzende schulterseitige Umfangsrille 4 einmünden, die Profilrippe 1 in Rippenblöcke 1c strukturieren und in Draufsicht auf den Laufstreifen und bei in vertikaler Richtung verlaufender Reifenäquatorialebene (Linie A-A) betrachtet, bezüglich der Umfangsrichtung gleichsinnig geneigt sowie linkssteigend verlaufen. In Umfangsrichtung unmittelbar aufeinanderfolgende Einschnitte 5 weisen am Niveau der Rippenaußenfläche 1c in Umfangsrichtung als kleinstmögliche Abstände ermittelte, gegenseitige Abstände a_{E} von vorzugsweise 20,0 mm bis 40,0 mm auf. Die Einschnitte 5 verlaufen, in Draufsicht betrachtet, gerade, innerhalb der jeweiligen Profilrippe 1 parallel zueinander sowie zur axialen Richtung jeweils unter einem Winkel α von 5° bis 50°, insbesondere von 20° bis 40°.

Die weitere Ausgestaltung der Einschnitte 5 wird nachfolgend anhand eines einzelnen Einschnitts 5 erläutert.

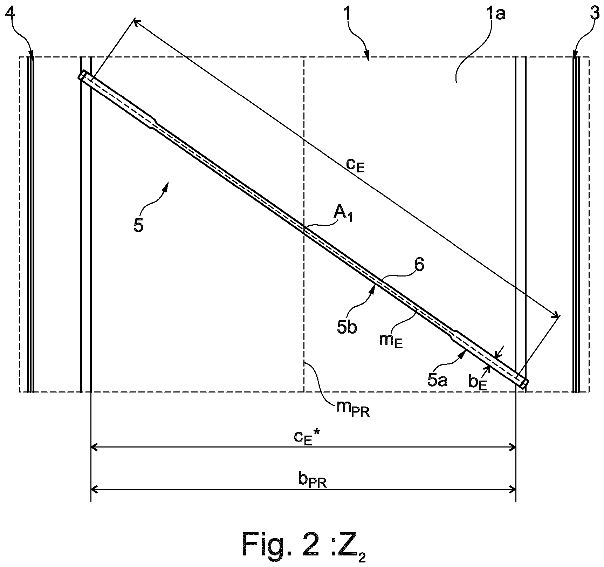

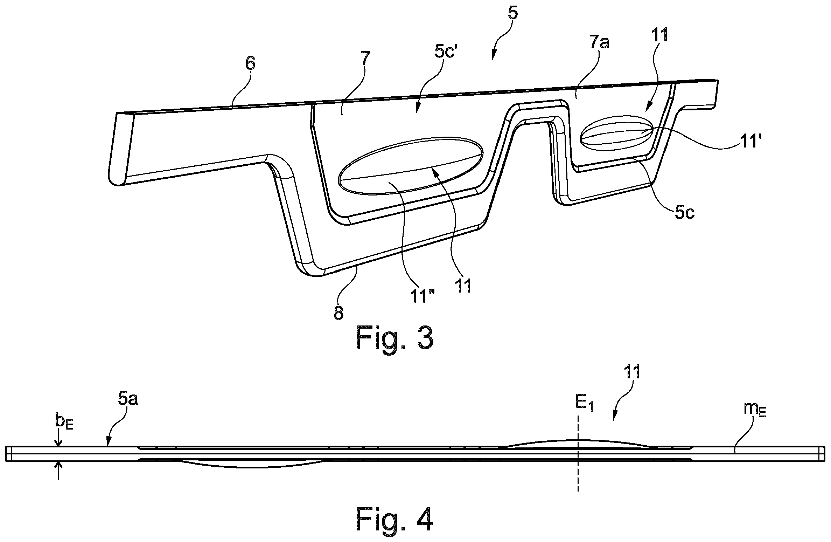

Fig. 2 zeigt eine vergrößerte Draufsicht im Bereich eines Einschnitts 5 aus der in Fig. 1 linken mittleren Profilrippe 1. Der Einschnitt 5 ist drehsymmetrisch bezüglich einer in radialer Richtung verlaufenden, auf der Rippenmittellinie m_{PR} liegenden Achse A₁ (Fig. 2, erscheint als Punkt, vergl. Fig. 3) ausgeführt, wobei der Einschnitt 5 durch eine Drehung um 180° auf sich selbst abgebildet wird. Der Einschnitt 5 weist an der Rippenaußenfläche 1a zwei Einschnittkanten 6 auf, ist - wie Fig. 3 in Kombination mit Fig. 6 zeigt - durch zwei von den Einschnittkanten 6 ausgehenden Einschnittwänden 7 und einen Einschnittgrund 8 begrenzt, weist ferner eine in Draufsicht dem Einschnittverlauf folgende, in der Laufstreifenperipherie liegende, übereinstimmend zu den Einschnittkanten 6 beabstandete, gerade Einschnittmittellinie m_{E} (Fig. 2), eine von dieser ausgehende, übereinstimmend zu den Einschnittwänden 7 beabstandete Einschnittmittelfläche M_{E} (Fig. 6), in radialer Richtung eine maximale Tiefe t_{E} (Fig. 5, Tiefe an der tiefsten Stelle) von 65% bis 100% der Profiltiefe T_{UR} (Fig. 5), insbesondere von höchstens der um 1,0 mm, bevorzugt von höchstens der um 1,5 mm, verringerten Profiltiefe T_{UR}, eine senkrecht zur Einschnittmittelfläche M_{E} ermittelte, maximale Breite b_{E} (Fig. 2, Fig. 6, Breite an der breitesten Stelle) von 0,40 mm bis 2,00 mm, insbesondere von 0,80 mm bis 1,60 mm, bevorzugt von 0,60 mm bis 1,00 mm, eine am Niveau der Rippenaußenfläche 1a ermittelte, auf die Einschnittmittellinie mε bezogene, in die axiale Richtung projizierte Länge c_{E}* (Fig. 2) und eine am Niveau der Rippenaußenfläche 1a entlang der Einschnittmittellinie m_{E} ermittelte Erstreckungslänge c_{E} (Fig. 2) auf. Da der Einschnitt 5 die mittlere Profilrippe 1 durchquert, stimmt die Länge c_{E}* des Einschnitts 5 mit der Breite b_{PR} der mittleren Profilrippe 1 überein.

Wie Fig. 2 und Fig. 5 miteinander zeigen, setzt sich der Einschnitt 5 in seiner entlang der Einschnittmittellinie m_{E} (Fig. 2) vorliegenden Erstreckung betrachtet, aus zwei Randabschnitten 5a und einem in Draufsicht die Rippenmittellinie m_{PR} (Fig. 2) passierenden, zwischen diesen verlaufenden Hauptabschnitt 5b zusammen und ist zusätzlich aus einer schmäleren, inneren Einschnittzone 5c (Fig. 5) und einer gegenüber dieser breiteren, den Einschnittgrund 8 mitbildenden äußeren Einschnittzone 5d (Fig. 5) mit der erwähnten maximalen Breite b_{E} (Fig. 6) gebildet, wobei die Einschnittzonen 5c, 5d, wie noch erläutert wird, auf spezifische Weise über die Randabschnitte 5a und den Hauptabschnitt 5b ausgebildet sind.

Gemäß Fig. 5 ist im Bereich jedes Randabschnitts 5a jeweils eine bis zur Umfangsrille 3 bzw. 4 (Fig. 2) reichende, in den Hauptabschnitt 5b hineinragende, an beide Einschnittwände 7 angebundene randseitige Grundanhebung 9 ausgebildet. Ferner ist im Bereich des Hauptabschnitts 5b mittig eine zentrale Grundanhebung 10 ausgebildet. Die Grundanhebungen 9, 10, sind, im entlang der Einschnittmittelfläche M_{E} (Fig. 6) ausgerichteten Längsschnitt durch den Einschnitt 5 betrachtet, jeweils trapezförmig, weisen jeweils eine gegenüber dem Niveau der maximalen Tiefe t_{E} in der Einschnittmittelfläche M_{E} in radialer Richtung ermittelte maximale Höhe h_{G} (Höhe an der höchsten Stelle) von 65% bis 75% der maximalen Tiefe tε sowie eine am Niveau der maximalen Tiefe t_{E} in der Einschnittmittelfläche M_{E} ermittelte maximale Erstreckungslänge c_{G} (Länge an der längsten Stelle) von 10% bis 20% der Erstreckungslänge cε des Einschnitts 5 auf. Die Grundanhebungen 9, 10 sind in der maximalen Höhe hc jeweils durch einen die Deckfläche der Grundanhebung 9, 10 bildenden Grundabschnitt 8a des Einschnittgrunds 8 sowie seitlich durch einen (randseitige Grundanhebung 9) bzw. an jeder Seite durch je einen (zentrale Grundanhebung 10) zur radialen Richtung geneigt sowie insgesamt langgestreckt S-förmig verlaufenden, einen Trapezschenkel der Grundanhebung 9 bzw. 10 bildenden Grundabschnitt 8b des Einschnittgrunds 8 begrenzt. Jeder Grundabschnitt 8b setzt sich aus einem gerade verlaufenden, mittigen Abschnittteil 8b' und zwei bogenförmig verlaufenden Abschnittteilen 8b" zusammen. Bei der "Teilung" des Einschnitts 5 in die Randabschnitte 5a und den Hauptabschnitt 5b bleiben die bogenförmig verlaufenden Abschnittteile 8b" unberücksichtigt, sodass die Teilung jeweils an einem Schnittpunkt S erfolgt, welcher sich durch Fortführen des entsprechenden mittigen Abschnittteils 8b' und Fortführen des entsprechenden Grundabschnitts 8a ergibt.

Der Hauptabschnitt 5b setzt sich aus einer an der einer Seite der Achse A₁ liegenden Abschnitthälfte 5b' und einer an der anderen Seite der Achse A₁ liegenden Abschnitthälfte 5b' zusammen, wobei der Einschnittgrund 8 im Bereich jeder Abschnitthälfte 5b' einen auf der maximalen Tiefe tε sowie zwischen den entsprechenden Grundabschnitten 8b verlaufenden Grundabschnitt 8c aufweist.

Die bereits erwähnte, schmälere, inneren Einschnittzone 5c weist, in Draufsicht auf die Einschnittwände 7 betrachtet und bezogen auf ihren äußeren Umfang, die Gestalt des Hauptabschnitts 5b in verkleinerter Form auf, wobei die Einschnittzone 5c - entsprechend der vorgesehenen Grundanhebungen 9, 10 - von einem im Hauptabschnitt 5b befindlichen, W-förmigen Zonenabschnitt 5d' der äußeren Einschnittzone 5d umlaufen ist.

Die innere Einschnittzone 5c weist eine senkrecht zur Einschnittmittelfläche M_{E} ermittelte, konstante Breite b_{C} (Fig. 6) von mindestens 0,20 mm, insbesondere von 0,40 mm bis 0,60 mm, auf, wobei die Breite b_{C} mindestens 0,20 mm, insbesondere mindestens 0,40 mm, bevorzugt mindestens 0,60 mm, kleiner ist als die maximale Breite b_{E} (Fig. 4) des Einschnitts 5. Die innere Einschnittzone 5c weist ferner eine entlang der Einschnittmittellinie mε ermittelte Erstreckungslänge cc von 65% bis 90%, insbesondere von 70% bis 75%, der Erstreckungslänge cε des Einschnitts 5 auf und setzt sich aus zwei in je einer der Abschnitthälften 5b' des Hauptabschnitts 5b befindlichen Zonenhälfte 5c' zusammen, wobei die Einschnittzone 5c und daher jede Zonenhälfte 5c' in radialer Richtung auf eine maximal Tiefe tc (Tiefe an der tiefsten Stelle, vergl. Fig. 6) von 60% bis 90%, insbesondere von 65% bis 75%, der maximalen Tiefe tε des Einschnitts 5 reicht.

Der W-förmige Zonenabschnitt 5d' weist an seiner schmälsten Stelle eine in der Einschnittmittelfläche M_{E} ermittelte, minimale Erstreckungsbreite b_{d} von zumindest 0,70 mm, insbesondere von zumindest 1,00 mm, auf, wobei die minimale Erstreckungsbreite b_{d} einen durch die Differenz zwischen der maximalen Breite b_{E} und der Breite b_{C} bedingten Zonenübergang 5e mitumfasst.

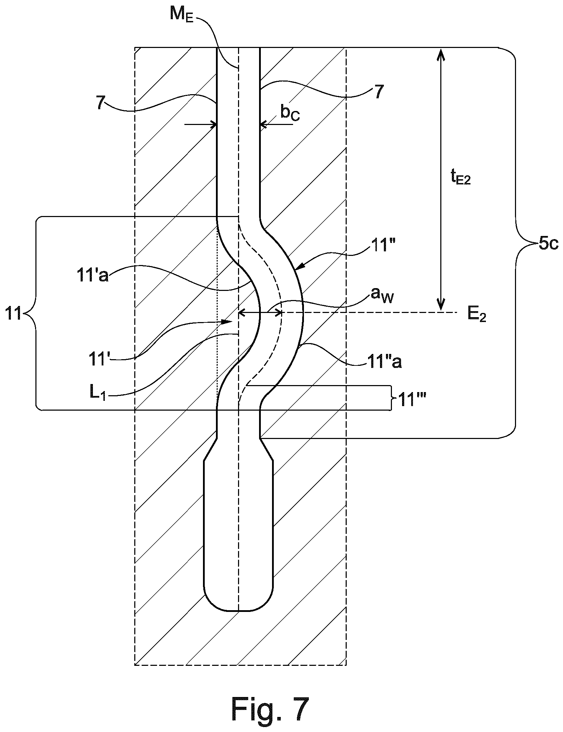

Wie Fig. 3 zeigt, ist jede Zonenhälfte 5c' jeweils mit einer von den Einschnittkanten 6 beabstandeten, lokalen Einschnittwandwölbung 11 versehen, welche gemäß Fig. 7 von einem an der einen Einschnittwand 7 ausgebildeten, lokalen Vorsprung 11' und einer an der jeweils anderen Einschnittwand 7 ausgebildeten, mit dem Vorsprung 11' korrespondierenden Vertiefung 11" gebildet ist, wobei der Vorsprung 11' in die Vertiefung 11" hineinragt. "Korrespondierend" bedeutet, dass die Breite b_{C} der inneren Einschnittzone 5c - wie bereits erwähnt - konstant ist. Gemäß Fig. 3 verläuft die Einschnittwandwölbung 11, im in radialer Richtung ausgerichtet Querschnitt und im in parallel zur Laufstreifenperiphere ausgerichteten Längsschnitt betrachtet, jeweils bogenförmig, insbesondere kreisbogenförmig, wobei die Einschnittwandwölbung 11 eine in radialer Richtung sowie in Draufsicht senkrecht zur Einschnittmittellinie m_{E} (Fig. 4) verlaufende Symmetrieebene E₁ (vergl. Fig. 4) und eine parallel zur Laufstreifenperipherie verlaufende Symmetrieebene E₂ aufweist (Fig. 5, Fig. 7). Im Hinblick auf die erwähnten Bogenformen der Einschnittwandwölbung 11 bleiben an deren jeweiligen Enden befindliche, entgegengesetzt zur sonstigen Bogenform gekrümmt verlaufende Rückführungsabschnitte 11‴ (Fig. 7, gezeigt für den Querschnitt) unberücksichtigt. Im Hinblick auf die Symmetrieebene E₂ bleibt die Krümmung des Laufstreifens unberücksichtigt. Die Symmetrieebene E₂ verläuft in einer in radialer Richtung ermittelten Tiefe t_{E2} (Fig. 5, Fig. 7) von 50% bis 75%, insbesondere von 55% bis 70%, bevorzugt von 60% bis 65%, der maximalen Tiefe tc (Fig. 5). Entsprechend der erwähnten, bezüglich der Achse A₁ (Fig. 5) vorliegenden drehsymmetrischen Ausgestaltung des Einschnitts 5, befindet sich gemäß Fig. 3 der Vorsprung 11' der einen Einschnittwandwölbung 11 an der einen Einschnittwand 7 und der Vorsprung 11' (nicht sichtbar) der jeweils anderen Einschnittwandwölbung 11 an der jeweils anderen Einschnittwand 7.

Gemäß Fig. 7 ist jeder Vorsprung 11' durch eine durchgehend nach außen gewölbte Deckfläche 11'a und jede Vertiefung 11" durch einen durchgehend nach innen gewölbten Boden 11"a begrenzt.

Wie Fig. 3 ferner zeigt, sind die Einschnittwandwölbungen 11 komplett von unstrukturierten Wandabschnitten 7a der Einschnittwände 7 umlaufen, wobei auf jeder Einschnittwand 7 ein einziger den jeweiligen Vorsprung 11' und die jeweilige Vertiefung 11" umlaufender, die sonstige innere Einschnittzone 5c einnehmender Wandabschnitt 7a vorgesehen ist. Die unstrukturierten Wandabschnitte 7a verlaufen, im in Draufsicht senkrecht zur Einschnittmittellinie mε ausgerichteten Querschnitte betrachtet, gerade (Fig. 6, vergl. Lage der Linie VI-VI in Fig. 5 iVm der in Fig. 2 gezeigten Einschnittmittellinie m_{E}).

In Fig. 7 ist eine die Einschnittmittelfläche M_{E} innerhalb der Symmetrieebene E₁ (vergl. Lage der Linie VI-VI in Fig. 5) im Bereich radial außerhalb der Einschnittwandwölbung 11 mit der Einschnittmittelfläche M_{E} im Bereich radial innerhalb der Einschnittwandwölbung 11 verbindende, gerade verlaufende Bezugslinie L₁ eingezeichnet. Gemäß Fig. 5 ist jede Einschnittwandwölbung 11 bezogen auf ihren äußeren Umfang oval sowie parallel zur Laufstreifenperipherie langgestreckt, wobei jede Einschnittwandwölbung 11 eine in der Symmetrieebene E₂ parallel zur Einschnittmittellinie mε ermittelte maximale Erstreckungslänge cw (Erstreckungslänge an der längsten Stelle) von 10% bis 25% der Erstreckungslänge cε des Einschnitts 5, eine in der Symmetrieebene E₁ ermittelte maximale Breite bw (Breite an der breitesten Stelle) von 35% bis 70%, insbesondere von 40% bis 60%, der maximalen Tiefe tc der zugehörigen Zonenhälfte 5c' und eine entlang der Schnittlinie der Symmetrieebene E₁ mit der Symmetrieebene E₂ sowie senkrecht zur Bezugslinie L₁ ermittelte, auf die Einschnittmittelfläche M_{E} bezogene, maximale Auslenkung aw (Fig. 7) von 0,3 mm bis 1,5 mm aufweist.

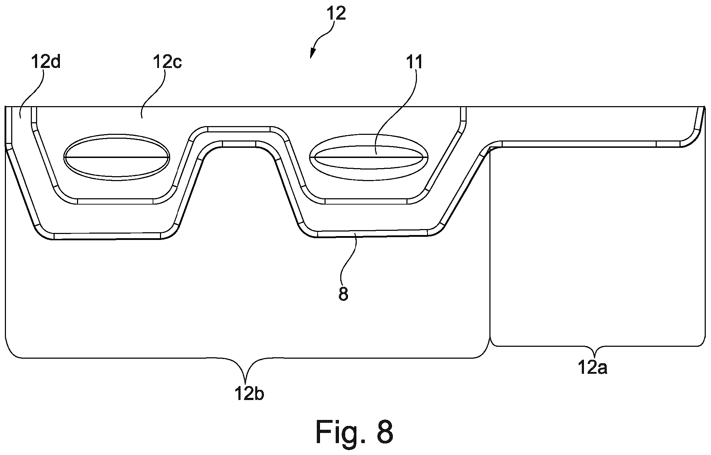

Gemäß Fig. 1 sind in jeder schulterseitigen Profilrippe 2 über deren Umfang verteilt angeordnete, in Draufsicht durchgehend gebogen verlaufende (bogenförmig verlaufende) Einschnitte 12 ausgebildete, welche großteils innerhalb des Innenabschnitts 2c und ferner im Außenabschnitt 2d verlaufen, wobei jeder zweite Einschnitt 12 in eine im Außenabschnitt 2d verlaufende Querrille 13 einmündet. Wie Fig. 8 zeigt, unterscheiden sich die Einschnitte 12 von den Einschnitten 5, dadurch, dass diese in ihrer entlang der Einschnittmittellinie m_{E} (nicht gezeigt) vorliegenden Erstreckung aus einem Hauptabschnitt 12b und einem einzigen, laufstreifenaußenseitigen Randabschnitt 12a zusammengesetzt sind und ferner aus einer schmäleren, inneren Einschnittzone 12c und einer gegenüber dieser breiteren, den Einschnittgrund 8 mitbildenden äußeren Einschnittzone 12d mit der maximalen Breite bε gebildet sind. Die Einschnitte 12 weisen eine auf die Einschnittmittellinie mε bezogene, in die axiale Richtung projizierte Länge c_{E}*' (Fig. 1) von 70% bis 90% der bereits erwähnten Breite b_{PR}' auf. Ferner sind die entsprechenden Dimensionen der Einschnitte 12, beispielsweise die Dimensionen der Einschnittwandwölbungen 11, gegenüber den Einschnitten 5 entsprechend angepasst.

Die Erfindung ist auf die beschriebene Ausführungsform nicht beschränkt.

Die Einschnittwandwölbung ist in der Draufsicht vorliegenden Erstreckungsrichtung des Einschnitts langgestreckt, weist eine parallel zur Laufstreifenperipherie ermittelte maximale Erstreckungslänge und eine in radialer Richtung ermittelte maximale Breite auf und kann eine von der beschriebenen Form abweichende Form aufweisen. Die Einschnittwandwölbung ist aus einem einzigen an der einen Einschnittwand befindlichen Vorsprung und einer einzigen an der anderen Einschnittwand befindlichen Vertiefung gebildet. Die Einschnitte können auch mit zwei aneinander anschließende Einschnittwandwölbungen versehen sein sowie ferner, in Draufsicht betrachtet, zur axialen Richtung unter einem Winkel von 0° bis 50° verlaufen. Außerdem können die Einschnitte, in Draufsicht betrachtet, zumindest abschnittsweise wellenförmig verlaufen. Die Einschnitte verlaufen bevorzugt in Draufsicht insgesamt gerade bzw. durchgehend gebogen, wie auch beim Ausführungsbeispiel gezeigt. Bei durchgehend gebogen und/oder wellenförmig verlaufenden Einschnitten bezieht sich der Winkel auf eine die Enden der Einschnittmittellinie verbindende gerade Linie. Der Laufstreifen kann ferner durch Rillen begrenzte Profilblöcke mit den Einschnitten aufweisen.

### Bezugszeichenliste

- 1: mittlere Profilrippe
- 1a: Rippenaußenfläche
- 1b: Rippenkante
- 1c: Rippenblock
- 2: schulterseitige Profilrippe
- 2a: Rippenaußenfläche
- 2b: Rippenkante
- 2c: Innenabschnitt
- 2d: Außenabschnitt
- 3: zentrale Umfangsrille
- 4: schulterseitige Umfangsrille
- 5: Einschnitt
- 5a: Randabschnitt
- 5b: Hauptabschnitt
- 5b': Abschnitthälfte
- 5c: innere Einschnittzone
- 5c': Zonenhälfte
- 5d: äußere Einschnittzone
- 5d': Zonenabschnitt
- 5e: Zonenübergang
- 6: Einschnittkante
- 7: Einschnittwand
- 7a: Wandabschnitt
- 8: Einschnittgrund
- 8a: Grundabschnitt
- 8b: Grundabschnitt
- 8b': mittiger Abschnittteil
- 8b": Abschnittteil
- 8c: Grundabschnitt
- 9: randseitige Grundanhebung
- 10: zentrale Grundanhebung
- 11: Einschnittwandwölbung
- 11': Vorsprung
- 11'a: Deckfläche
- 11": Vertiefung
- 11"a: Boden
- 11‴: Rückführungsabschnitt
- 12: Einschnitt
- 12a: Randabschnitt
- 12b: Hauptabschnitt
- 12c: innere Einschnittzone
- 12d: äußere Einschnittzone
- 13: Querrille
- A-A: Linie (Reifenäquatorialebene)
- A₁: Achse
- a_{E}: Abstand
- aw: maximale Auslenkung
- b_{E}, b_{W}: maximale Breite
- bc, b_{PR}, b_{PR}', B_{UR}: Breite
- b_{d}: minimale Erstreckungsbreite
- c_{C}, c_{E}: Erstreckungslänge
- c_{E}*, c_{E}*': Länge
- c_{G}, c_{w}: maximale Erstreckungslänge
- E₁, E₂: Symmetrieebene
- h_{G}: maximale Höhe
- L: Linie (seitlicher Rand der Bodenaufstandsfläche)
- L₁: Bezugslinie
- m_{E}: Einschnittmittellinie
- M_{E}: Einschnittmittelfläche
- m_{PR}: Rippenmittellinie
- S: Schnittpunkt
- t_{C}, t_{E}, t_{E2}: maximale Tiefe
- T_{UR}: Profiltiefe
- Z₂: Detail
- α: Winkel

## Patentansprüche

1. Fahrzeugreifen mit einem Laufstreifen mit Rillen (3, 4), welche Profilblöcke und/oder zumindest eine Profilrippe (1, 2) begrenzen, wobei Profilblöcke bzw. die zumindest eine Profilrippe (1, 2) mit in Draufsicht zur axialen Richtung unter einem Winkel von 0° bis zu 50° verlaufenden Einschnitten (5, 12) mit jeweils einer maximalen Breite (b_{E}) von 0,4 mm bis 2,0 mm, einer maximalen Tiefe (tε) von 70% bis 100% der Profiltiefe (T_{UR}) und Einschnittkanten (6) versehen sind, wobei jeder Einschnitt (5, 12) zumindest in einem in Draufsicht vorliegenden Abschnitt (5b, 12b) auf die maximale Tiefe (tε) reicht und in diesem Abschnitt (5b, 12b) zumindest eine von den Einschnittkanten (6) beabstandete, lokale, im in radialer Richtung ausgerichteten Querschnitt bogenförmig verlaufende Einschnittwandwölbung (11) mit einer auf der einen Einschnittwand (7) ausgebildeten Vertiefung (11") und einem dieser gegenüberliegenden, auf der anderen Einschnittwand (7) ausgebildeten, mit der Vertiefung (11") korrespondierenden und in diese hineinragenden Vorsprung (11') aufweist, wobei die Einschnittwandwölbung (11) in der in Draufsicht vorliegenden Erstreckungsrichtung des Einschnitts (5, 12) langgestreckt ist, eine parallel zur Laufstreifenperipherie ermittelte maximale Erstreckungslänge (cw) und eine in radialer Richtung ermittelte maximale Breite (bw) aufweist,
**dadurch gekennzeichnet,**
**dass** der Einschnitt (5, 12) aus einer von den Einschnittkanten (6) ausgehenden, in radialer Richtung in das zugehörige Profilpositiv (1, 2) hineinverlaufenden, inneren Einschnittzone (5c, 12c) und einer den kompletten Einschnittgrund (8) mitbildenden, die innere Einschnittzone (5c, 12c) im Inneren des Profilpositivs (1, 2) umgebenden, zu den Einschnittkanten (6) reichenden, äußeren Einschnittzone (5d, 12d) mit der maximalen Breite (b_{E}) gebildet ist, wobei die innere Einschnittzone (5c, 12c) eine gegenüber der maximalen Breite (b_{E}) des Einschnitts (5, 12) kleiner ausgeführte Breite (bc) aufweist und die komplette Einschnittwandwölbung (11) in der inneren Einschnittzone (5c, 12c) ausgebildet ist.

2. Fahrzeugreifen nach Anspruch 1, **dadurch gekennzeichnet, dass** die Breite (bc) der inneren Einschnittzone (5c, 12c) mindestens 0,20 mm, insbesondere 0,40 mm bis 0,60 mm, beträgt, wobei die Breite (bc) der inneren Einschnittzone (5c, 12c) mindestens 0,20 mm, insbesondere mindestens 0,40 mm, bevorzugt mindestens 0,60 mm, kleiner ist als die maximale Breite (b_{E}) des Einschnitts (5, 12).

3. Fahrzeugreifen nach Anspruch 1 oder 2, **dadurch gekennzeichnet, dass** die innere Einschnittzone (5c, 12c) in radialer Richtung bis in eine maximale Tiefe (tc) von 60% bis 90%, insbesondere von 65% bis 75%, der maximalen Tiefe (t_{E}) des Einschnitts (5, 12) reicht.

4. Fahrzeugreifen nach einem der Ansprüche 1 bis 3, **dadurch gekennzeichnet, dass** die innere Einschnittzone (5c, 12c) eine entlang der Einschnittmittellinie (m_{E}) ermittelte Erstreckungslänge (cc) von 65% bis 90%, insbesondere von 70% bis 75%, der entlang der Einschnittmittellinie (m_{E}) ermittelten Erstreckungslänge (c_{E}) des Einschnitts (5, 12) aufweist.

5. Fahrzeugreifen nach einem der Ansprüche 1 bis 4, **dadurch gekennzeichnet, dass** die maximale Breite (bw) der Einschnittwandwölbung (11) 35% bis 70%, insbesondere 40% bis 60%, der maximalen Tiefe (tc) der inneren Einschnittzone (5c, 12c) beträgt.

6. Fahrzeugreifen nach einem der Ansprüche 1 bis 5, **dadurch gekennzeichnet, dass** die maximale Erstreckungslänge (cw) der Einschnittwandwölbung (11) 10% bis 25% der Erstreckungslänge (c_{E}) des Einschnitts (5, 12) beträgt.

7. Fahrzeugreifen nach einem der Ansprüche 1 bis 6, **dadurch gekennzeichnet, dass** die Einschnittwandwölbung (11), im in radialer Richtung ausgerichteten Querschnitt und im parallel zur Laufstreifenperipherie ausgerichteten Längsschnitt betrachtet, jeweils bogenförmig verläuft, wobei der Vorsprung (11') der Einschnittwandwölbung (11) durch eine durchgehend nach außen gewölbte Deckfläche (11'a) und die Vertiefung (11') der Einschnittwandwölbung (11) durch einen durchgehend nach innen gewölbten Boden (11"a) begrenzt ist.

8. Fahrzeugreifen nach einem der Ansprüche 1 bis 7, **dadurch gekennzeichnet, dass** die Einschnittwandwölbung (11) von unstrukturierten Wandabschnitten (7a) der Einschnittwände (7) umlaufen ist und bevorzugt diese Wandabschnitte (7a) die nicht von der Einschnittwandwölbung (11) eingenommenen Bereiche der inneren Einschnittzone (5c, 12c) einnehmen.

9. Fahrzeugreifen nach einem der Ansprüche 1 bis 8, **dadurch gekennzeichnet, dass** die Einschnittwandwölbung (11) eine in einer konstanten Tiefe (t_{E2}) verlaufende erste Symmetrieebene (E₂) und eine in radialer Richtung verlaufende zweite Symmetrieebene (E₁) aufweist.

10. Fahrzeugreifen nach Anspruch 9, **dadurch gekennzeichnet, dass** die konstante Tiefe (t_{E2}), in welcher die erste Symmetrieebene (E₂) der Einschnittwandwölbung (11) verläuft, 50% bis 75%, insbesondere 55% bis 70%, bevorzugt 60% bis 65%, der maximalen Tiefe (tc), bis in welche die innere Einschnittzone (5c, 12c) reicht, beträgt.

11. Fahrzeugreifen nach Anspruch 9, **dadurch gekennzeichnet, dass** die Einschnittwandwölbung (11) eine entlang der Schnittlinie der Symmetrieebenen (E₁, E₂) ermittelte maximale Auslenkung (aw) von 0,3 mm bis 1,5 mm aufweist, wobei die maximale Auslenkung (aw) senkrecht zu einer geraden Bezugslinie (L₁) ermittelt sowie auf die Einschnittmittelfläche (M_{E}) bezogen ist, wobei die Bezugslinie (L₁) innerhalb der zweiten Symmetrieebene (E₁) die Einschnittmittelfläche (M_{E}) im Bereich radial außerhalb der Einschnittwandwölbung (11) mit der Einschnittmittelfläche (M_{E}) im Bereich radial innerhalb der Einschnittwandwölbung (11) verbindet.

12. Fahrzeugreifen nach einem der Ansprüche 1 bis 11, **dadurch gekennzeichnet, dass** die Einschnitte (5, 12), in Draufsicht betrachtet, zumindest über die innere Einschnittzone (5c) insgesamt gerade oder durchgehend gebogen, also bogenförmig, verlaufen.

13. Fahrzeugreifen nach einem der Ansprüche 1 bis 12, **dadurch gekennzeichnet, dass** zu den Einschnitten (5, 12) Einschnitte (5, 12) gehören, welche jeweils mit zumindest einer an beide Einschnittwände (7) angebundenen Grundanhebung (9, 10) versehen sind, wobei die Einschnittwandwölbungen (11) zumindest über den Großteil ihrer maximalen Erstreckungslänge (cw), insbesondere über zumindest 80% ihrer maximalen Erstreckungslänge (cw), bevorzugt über ihre komplette maximale Erstreckungslänge (cw), radial außerhalb eines auf der maximalen Tiefe (tε) des Einschnitts (5, 12) verlaufenden Grundabschnitts (8c) des Einschnittgrunds (8) verlaufen.

14. Fahrzeugreifen nach Anspruch 13, **dadurch gekennzeichnet, dass** die Grundanhebung(en) (9) eine bzw. zwei randseitige Grundanhebung(en) (9) ist bzw. sind oder dass zu den Grundanhebungen (9) eine bzw. zwei randseitige Grundanhebung(en) (9) gehören, wobei die bzw. jede randseitige Grundanhebung (9) dem Einschnitt (5, 12) einen bzw. jeweils einen randseitigen Einschnittabschnitt (5a, 12a) verleiht, wobei der Einschnitt (5, 12) aus dem bzw. den randseitigen Einschnittabschnitt(en) (5a, 12a) und einem auf die maximale Tiefe (tε) des Einschnitts (5, 12) reichenden Hauptabschnitt (5b, 12b) zusammengesetzt ist, wobei die innere Einschnittzone (5c, 12c), bei Draufsicht auf die Einschnittwände (7) betrachtet und bezogen auf ihren äußeren Umfang, die Gestalt des Hauptabschnitts (5b) in verkleinerter Form aufweist.

15. Fahrzeugreifen nach einem der Ansprüche 1 bis 14, **dadurch gekennzeichnet, dass** Einschnitte (5, 12) vorgesehen sind, welche jeweils mit zwei Einschnittwandwölbungen (11) versehen sind, wobei bevorzugt die eine Einschnittwandwölbung (11) um 180° verdreht zur anderen Einschnittwandwölbung (11) orientiert ist, wobei die Drehung um eine in radialer Richtung verlaufende Achse (A₁) erfolgt.
